(19) Europäisches Patentamt / European Patent Office / Office européen des brevets

(11) **EP 2 245 692 B1**

(12) **EUROPÄISCHE PATENTSCHRIFT**

(45) Veröffentlichungstag und Bekanntmachung des Hinweises auf die Patenterteilung:
**22.03.2017 Patentblatt 2017/12**

(51) Int Cl.:
*H01M 8/1253* (2016.01)     *H01M 8/124* (2016.01)

(21) Anmeldenummer: **09712187.5**

(22) Anmeldetag: **20.01.2009**

(86) Internationale Anmeldenummer:
**PCT/EP2009/050587**

(87) Internationale Veröffentlichungsnummer:
**WO 2009/103580 (27.08.2009 Gazette 2009/35)**

(54) **ELEKTROLYT FÜR KOSTENGÜNSTIGE, ELEKTROLYTGESTÜTZTE HOCHTEMPERATUR-BRENNSTOFFZELLE MIT HOHER LEISTUNG UND HOHER MECHANISCHER FESTIGKEIT**

ELECTROLYTE FOR COST-EFFECTIVE, ELECTROLYTE-SUPPORTED HIGH-TEMPERATURE FUEL CELL HAVING HIGH PERFORMANCE AND HIGH MECHANICAL STRENGTH

ÉLECTROLYTE POUR PILE À COMBUSTIBLE À HAUTE TEMPÉRATURE ÉCONOMIQUE À BASE D ÉLECTROLYTE, DE HAUTE PUISSANCE ET DE GRANDE RÉSISTANCE MÉCANIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **19.02.2008 DE 102008009985**

(43) Veröffentlichungstag der Anmeldung:
**03.11.2010 Patentblatt 2010/44**

(73) Patentinhaber: **sunfire GmbH**
**01237 Dresden (DE)**

(72) Erfinder:
• **OTTERSTEDT, Ralph**
  **38640 Goslar (DE)**
• **LAUBE, Jörg**
  **79725 Laufenburg (DE)**
• **GOTTSCHLING, Marianne**
  **38640 Goslar (DE)**
• **SVEC, Michael**
  **95100 Selb (DE)**

(74) Vertreter: **Hansen, Jochen et al**
**Hansen und Heeschen**
**Patentanwälte**
**Eisenbahnstraße 5**
**DE-21680 Stade (DE)**

(56) Entgegenhaltungen:
**EP-A- 1 829 824      WO-A-94/11322**
**WO-A-2008/019926**

• **LV ET AL: "Study on zirconia solid electrolytes doped by complex additives" MATERIALS SCIENCE AND ENGINEERING A: STRUCTURAL MATERIALS:PROPERTIES, MICROSTRUCTURE & PROCESSING, LAUSANNE, CH, Bd. 458, Nr. 1-2, 14. April 2007 (2007-04-14), Seiten 355-360, XP022039863 ISSN: 0921-5093**
• **STRICKLER,D.W. ET AL.: "Electrical Conductivity in the ZrO2-Rich Region of Several M2O3-ZrO2 Systems" JOURNAL OF THE AMERICAN CERAMIC SOCIETY, Bd. 48, Nr. 6, 1965, Seiten 286-289, XP002525094**
• **LAUKAITIS ET AL: "Properties of YSZ thin films deposited by e-beam technique" SOLID STATE IONICS, NORTH HOLLAND PUB. COMPANY. AMSTERDAM, NL, Bd. 179, Nr. 1-6, 22. Januar 2008 (2008-01-22), Seiten 182-187, XP022517301 ISSN: 0167-2738**

EP 2 245 692 B1

**Beschreibung**

**Hintergrund des Standes der Technik**

Eine Motivation für die Entwicklung elektrolytgestützter Brennstoffzellen mit hoher Leistung und hoher mechanischer Festigkeit ist deren Einsatz zur stationären und mobilen Stromgewinnung, zum Beispiel in Straßenfahrzeugen, in der Raumfahrt, in Verbindung mit $H_2$-Speichern (zum Beispiel Metall-Hydriden) als Kraftwerke im Megawatt-Bereich für Spitzenbelastungen, als Kraft-Wärme-Systeme im Bereich der Hausenergie.

Die Erfindung fällt in das technische Gebiet der Hochtemperaturbrennstoffzellen. Brennstoffzellen sind galvanische Zellen, welche chemische Energie direkt mit hoher Effizienz in elektrische Energie wandeln. Im Gegensatz zu herkömmlicher Kraftwerks- und Turbinentechnik verspricht die Brennstoffzellentechnik eine hohe elektrische Energieeffizienz auch bei kleinen Anlagen im Bereich von 0,1 - 1000 kW.

Die gängigste chemische Reaktion, die in Brennstoffzellen genutzt wird, ist die sog. Knallgasreaktion zwischen Wasserstoff und Sauerstoff. Hochtemperatur-Brennstoffzellen bieten gegenüber Niedertemperatur-Brennstoffzellen (z.B. Polymer-Elektrolyt-Membran-Brennstoffzellen) den Vorteil, dass sie bei entsprechender katalytischer Aktivität der Anode neben Wasserstoff auch Kohlenmonoxid und/oder Methan sowie höhere Kohlenwasserstoffe - direkt oder gegebenenfalls nach einfacher Reformierung mit Wasser oder Luftsauerstoff zu wasserstoff- und kohlenmonoxidreichem Brenngas - in elektrische Energie umwandeln können.

Die für elektrochemische Energiewandier wie Batterien und Brennstoffzellen typische Trennung von Anoden- und Kathodenreaktion erfolgt bei Hochtemperatur-Brennstoffzellen mittels einer keramischen Membran, dem sogenannten Elektrolyten, der elektronisch isolierend, jedoch leitend für Wasserstoffionen oder Sauerstoffionen sein muss. Der Gegenstand dieser Erfindung ist ein Elektrolyt für eine Hochtemperatur-Brennstoffzelle auf Basis von Sauerstoffionenleitern, ein sog. Festoxidelektrolyt, und eine elektrolytgestützte Festoxidbrennstoffzelle (SOFC = Solid Oxide Fuel Cells), die auf diesem Elektrolyten beruht und die dadurch erhältlich ist, dass auf den sauerstoffionenleitenden Elektrolyten eine für die Wasserstoffoxidation elektrokatalytisch aktive Anode und eine für die Sauerstoff-Reduktion elektrokatalytisch aktive Kathode aufgebracht wird.

Eine einzelne Hochtemperatur-Brennstoffzelle erzeugt maximal eine Leerlauf- öder Ruhespannung von ca. 1 Volt, so dass zur Erzeugung energietechnisch brauchbarer Spannungen von 12 V und mehr mehrere Einzelzellen in Reihe (d.h. Anode an Kathode; also bipolar) geschaltet, d.h. gestapelt, werden müssen. Unter anderem zur notwendigen Abtrennung der Gasräume von Anode und Kathode werden zwischen den Einzelzellen eines Brennstoffzellenstapels sog. Interkonnektoren, auch Bipolarplatten genannt, eingefügt, mit denen die Zellen fest und elektrisch leitend verbunden werden müssen, um einen Stromfluss durch den Zellstapel zu ermöglichen. Aus Kostengründen, aber auch aus Gründen der Betriebsführung (Aufheizverhalten, thermische Masse) wird die Verwendung von 0,2 - 0,5 mm dünnen, metallischen Bipolarplattenmaterialien angestrebt. Die Wahl des metallischen Materials wird durch eine Vielzahl von Anforderungen eingeschränkt (u.a. Korrosionsbeständigkeit, elektrische Leitfähigkeit der Passivschicht und Anpassung des thermischen Ausdehnungsverhaltens an die keramische Zelle).

Bekannte, geeignete metallische Werkstoffe sind schmelzmetallurgisch hergestellte, ferritische Stähle wie z.B. Crofer22APU der Fa. ThyssenKruppVDM, pulvermetallurgisch hergestellte Fe-Cr-Legierungen, z.B. die ITM-Legierungen der Fa. Plansee, oder pulvermetallurgisch hergestellte Cr-Fe-Basislegierungen, z.B. Ducrolloy der Fa. Plansee. Letztere haben den Nachteil, dass Plattengrößen, wie sie typischerweise für Bipolarplatten benötigt werden, nach dem Stand der Herstellungstechnik nicht unter 1,5 mm Dicke herstellbar sind; der Vorteil ist, dass sie auch bei 950 °C noch korrosionsbeständig und mechanisch fest sind. Die ferritischen Legierungen können vorteilhaft zu dünnen Blechen von typischerweise 0,3 - 0,5 mm Dicke verarbeitet werden; sie weisen aber den Nachteil auf, dass sie bis max. 850°C korrosionsbeständig sind.

CrFe-Basis-Legierungen bestehen zum überwiegenden Teil aus Chrom (zum Beispiel 95 % Chrom, 5 % Eisen für das Material von Siemens/Plansee). Die CrFe-Basis-Legierungen sind nur pulvermetallurgisch darstellbar; sie werden durch Pressen des Pulvers geformt und sind weder spanend bearbeitbar, noch kalt umformbar (zum Beispiel durch Biegen, Tiefziehen, etc.), da sie zu spröde sind.

Ferritische Fe-Cr-Legierungen (mit maximal 25 % Chromanteil) können wie Stahl schmelzmetallurgisch (beispielsweise durch Vakuumschmelzen) hergestellt werden und können daher zu Blechen gewalzt, spanend bearbeitet und kalt umgeformt werden.

Alternativ zur schmelzmetallurgischen Herstellung können die ferritischen Fe-Cr -Legierungen auch pulverrnetallurgisch, d.h. durch Pressen und Sintern, hergestellt werden. Sie haben dann ähnliche Eigenschaften wie die schmelzmetallurgisch hergestellten ferritischen Stähle; sie sind jedoch aufgrund der Art ihrer Herstellung keine Stähle.

Sowohl schmelzmetallurgisch wie pulvermetallurgisch hergestellte, als Materialien für SOFC-Bipolarplatten geeignete Fe-Cr-Legierungen zeichnen sich durch einen thermischen Ausdehnungskoeffizienten (TEC = thermal expansion coefficient; alle im Folgenden genannten Werte für 30°C, Bezugstemperatur) im Bereich von 11,8 - 1Z,2*$10^{-6}$ $K^{-1}$ bei 800°C, und von 10,6 - 10,7*$10^{-6}$ $K^{-1}$ bei 200 °C aus. CrFe-Basislegierungen weisen einen thermischen Ausdehnungskoeffizienten von $10,1*10^{-6}$ $K^{-1}$ bei 800 °C und von $8,9*10^{-6}$ $K^{-1}$ bei 200°C auf. Aufgrund der Notwendigkeit einer festen Verbindung zwischen Bipolarplatte und keramischer Zelle ist ein möglichst geringer Unterschied der thermischen Ausdehnungskoeffizienten von Bipolarplatte und keramischer Zelle erwünscht.

Keramische Brennstoffzellen lassen sich grob in die Typen elektrolyt-, kathoden-, anoden- und drittmaterial-gestützte Zellen klassifizieren. Geometrisch unterscheidet man zusätzlich nach tubularen und planaren Zellen.

Bei elektrolytgetragenen Zellen muss die Elektrolytdicke je nach Festigkeit des Elektrolytmaterials und Zellgröße wenigstens 50 - 150 $\mu$m betragen. Anode und Kathode besitzen je nach Aufbau und Material eine Schichtdicke von 20 - 100 $\mu$m. Bei kathodengestützten Zellen ist das Kathodenmaterial, meist Lanthan-Strontium-Mangan-Oxid, als poröser Träger von ca. 1 mm Dicke ausgebildet; auf dem Träger befindet sich ggf. eine dünne Kathodenfunktionsschicht und darauf eine 5 - 15 $\mu$m dünne Elektrolyt- und darauf eine 20 - 100 $\mu$m dicke Anodenschicht. Bei anodengestützten Zellen ist das Anodenmaterial, meist ein Cermet von Nickel und (teil-)stäbilisiertem Zirkonium(IV)oxid, als poröser Träger von 0,2 - 1,5 mm Dicke ausgebildet. Darauf befindet sich ggf. eine dünne Anodenfunktionsschicht und darauf eine 5 -15 $\mu$m dünne Elektrolyt- und darauf eine 20 - 100 $\mu$m dicke Kathodenschicht. Bei drittmaterialgestützten Zellen besteht das poröse Trägermaterial für den Aufbau, der die Anode, den 5-15 $\mu$m dünnen Elektrolyten, und die Kathode umfasst, aus korrosionsbeständigem Metall oder inerter Keramik.

Das stützende Material bestimmt dabei im Wesentlichen das thermische Ausdehnungsverhalten. Die hier verwendeten Abkürzungen des allgemeinen Typs "Zahl-Element-SZ" können wie folgt erläutert werden: Die Zahl gibt die Dotierung des Materials in mol-Prozent an; das Element gibt das Dotierungselement bzw. dessen Oxid an; SZ bedeutet stabilisiertes Zirkonium(IV)oxid. Zum Beispiel bedeutet 3YSZ ein mit 3 mol-% Yttrium(III)oxid dotiertes Zirkonium(IV)oxid; 10ScSZ bedeutet ein mit 10 mol-% Scandium(III)oxid dotiertes Zirkonium(IV)oxid; und 5YbSZ bedeutet ein mit 5 mol-% Ytterbiurn(III)oxid dotiertes Zirkonium(IV)oxid. Elektrolyte aus 3YSZ (mit 3 mol-% Yttrium(III)oxid stabilisiertes Zirkonium(IV)oxid) von elektrolytgestützten Zellen weisen einen TEC von ca. $10,9*10^{-6}$ $K^{-1}$ bei 800°C, und von ca. $10,4*10^{-6}$ $K^{-1}$ bei 200 °C, auf. Elektrolyte auf Basis 8YSZ (mit 8 mol-% Yttrium(III)oxid stabilisiertes Zirkonium(IV)-oxid) weisen einen TEC von ca. $10,1*10^{-6}$ $K^{-1}$ bei 800 °C, und von ca. $8,8 - 9,2*10^{-6}$ $K^{-1}$ bei 200 °C auf.

Anodengestützte Zellen auf Basis Ni/YSZ weisen einen TEC von ca. $12 - 13*10^{-6}$ $K^{-1}$ auf. Anodengestützte Zellen harmonieren bekanntermaßen mit den ferritischen Legierungen, während elektrolytgestützte Zellen auf Basis 8YSZ (wie auch 10ScSZ ) gemäß dem Stand der Technik mit Cr-Fe-Basislegierungen zusammen verwendet werden.

Anodengestützte Zellen bieten zwar schon bei 700 - 800 °C sehr hohe Leistungsdichten, haben aber den Nachteil, gegenüber wiederholter anodenseitiger Oxidation und Reduktion mechanisch nicht stabil zu sein. Dieses Verhalten zwingt den Systementwickler, anodenseitig eine oxidierende Atmosphäre sicher zu unterbinden, was erhöhte Systemkosten nach sich zieht und die Art der Brenngasaufbereitung auf Wasserdampfreformierung einschränkt; dies ist für mobile Systeme generell unerwünscht und stellt für kleine stationäre Systeme eine Einschränkung dar. Die auf 8YSZ oder 10ScSZ basierenden, elektrolytgestützten Zellen zeigen bei Temperaturen oberhalb von 800-900°C hohe Leistungsdichten und können anodenseitig wiederholten Oxidations- und Reduktionszyklen ausgesetzt werden, sie weisen aber den Nachteil einer verhältnismäßig geringen mechanischen Festigkeit auf, die zu Elektrolytdicken von 150 Mikrometer und mehr, sowie zu einer besonders engen Anpassung der TECs von Interkonnekt und Zelle, und damit zur Verwendung der dicken und folglich teureren Interkonnektoren aus CrFe-Basislegierungen zwingt; andernfalls brechen die Zellen beim Aufheizen und/oder Abkühlen des Brennstoffzellenstapels.

Auf einem mit Scandium(III)oxid dotierten Zirkonium(IV)oxid (ScSZ) basierende elektrolytgestützte Zellen bieten dabei die höchste Leistungsdichte, sie sind aber aufgrund des extrem hohen Preises von Scandium(III)oxid (ca. 100x höher als Yttrium(III)oxid, bezogen auf die Stoffmenge), der unter anderem eine Folge der Abwesenheit von Lagerstätten ist, in der Massenherstellung unverhältnismäßig teuer.

Für ein technisch einfaches und robustes System ist daher die Kombination von elektrolytgestützten Zellen auf Basis von hochfestem 3YSZ sowohl mit CrFe-Basislegierungen (Fa. Sulzer Hexis) als auch mit ferritischen Fe-Cr-Legierungen (Fa. Staxera), die besonders kostengünstig und daher vorteilhaft sind, erprobt worden. Die auftretenden Unterschiede im TEC zwischen Interkonnektor und Elektrolyt werden dabei durch Gewichts- oder Verspannkräfte, die auf den Brennstoffzellenstapel aufgebracht werden, so kompensiert, dass die hochfesten, 3YSZ-basierten Zellen die auftretenden mechanischen Spannungen aufnehmen: Der Nachteil der 3YSZ-basierten elektrolytgestützten Zellen ist, dass - aufgrund der relativ niedrigen ionischen Leitfähigkeit des 3YSZ von ca. 2,5 S/m bei 850 °C - die Leistungsdichte der Zelle im Vergleich zu 8YSZ (ca. 8 S/m bei 850 °C), oder zu 10-11 ScSZ (ca. 20 S/m bei 850 °C) oder im Vergleich zu anodengestützten Zellen selbst bei Einsatz dünnerer 3YSZ-Elektrolyte (90 $\mu$m 3YSZ im Vergleich zu 150 $\mu$m 8YSZ oder 10ScSZ) deutlich niedriger ist, und daher größere und folglich teurere Stapel zur Erzielung einer bestimmten Leistung erforderlich sind.

Weiter ist aus der Druckschrift WO 2008/019926 A1 ein pulverförmiges Zirkoniumoxid bekannt, das Metalloxide aus der Gruppe Scandium, Yttrium, Seltenerden und/oder deren Mischungen enthält, sowie weiter ist ein Verfahren zu dessen Herstellung und dessen Verwendung in Brennstoffzellen, insbesondere für die Herstellung von Elektrolyt-Substraten für keramische Brennstoffzellen, bekannt.

Lv und Mitarbeiter (Mat. Sci. & Eng .. A 448, 355 (2007)) haben den Einfluss komplexer Additivmischungen auf die elektrische Leitfähigkeit, Volumendichte und die Korngröße von Zirkoniumdioxid-Festelektrolyten für unterschiedliche Beimengungen an Oxidgemischen, die Yttriumoxid und Ytterbiumoxid in Kombination mit Scandiumoxid oder mit Dysprosiumoxid enthielten. WO-A-94/11322 ist ein Festelektrolyt aus Oxiden mit größeren Mengen an Stabilisatoroxiden offenbart, das aus Pulvern mit mittleren Teilchendurchmessern von weniger als 100 nm erhalten wird. Die Oxide sind hier ionenleitende Oxide wie Zirkonoxid, Hafniumoxid oder Ceroxid, wohingegen als Stabilisatoroxide Oxide von Metallen eingesetzt werden können, deren Ionenradien denen des Kations des ionenleitenden Oxids ähnlich sind, etwa Scandiumoxid, Yttriumoxid, Erbiumoxid, Dysprosiumoxid oder Ytterbiumoxid.

Aufgabe der Erfindung

Es ist eine Aufgabe der vorliegenden Erfindung, einen Elektrolyten für eine elektrolytgestützte Zelle bereitzustellen, die im Temperatur-Arbeitsbereich der ferritischen Eisen-Chrom-Stähle bzw. -Legierungen mit ca. 20 - 25 % Chromanteil, .d.h. bei 800 - 900 °C, die folgenden Merkmale aufweist:

Der erfindungsgemäße Elektrolyt für eine erfindungsgemäße Brennstoffzelle soll eine deutlich höhere Leistungsdichte ermöglichen als im Falle von Brennstoffzellen, die einen 90 $\mu$m dicken, 3YSZ-basierten, Elektrolyten haben. Bei 850°C Betriebstemperatur weist eine Zelle mit einem 90 $\mu$m dicken Elektrolyten aus 3YSZ je nach Einbrenntemperatur der Elektroden einen Flächenwiderstand von 0,49 - 0,54 $\Omega$cm$^2$ auf, was bei 700 mV Betriebsspannung in einem Brenngasgemisch von 1 Molanteil Wasserstoff und 1 Molanteil Wasser eine Leistungsdichte von ca. 315 bzw. ca. 290 mW/cm$^2$ ermöglicht.

Die auf dem erfindungsgemäßen Elektrolyten beruhende, elektrolytgestützte Brennstoffzelle soll einen ähnlich hohen thermischen Ausdehnungskoeffizienten wie eine 3YSZ-basierte elektrolytgestützte Zelle aufweisen, d.h. einen auf 30 °C bezogenen, thermischen Ausdehnungskoeffizienten (TEC) im Bereich von 10,6*10$^{-6}$ K$^{-1}$ bis 11,2*10$^{-6}$ K$^{-1}$ bei 800 °C, bevorzugt im Bereich von 10,7*10$^{-6}$ K$^{-1}$ bis 11,1*10$^{-6}$ K$^{-1}$, und besonders bevorzugt im Bereich von 10,8*10$^{-6}$ K$^{-1}$ bis 11,0*10$^{-6}$ K$^{-1}$, so dass beim Abkühlen von Brennstoffzellenstapeln mit Interkonnektoren aus ferritischem Stahl möglichst geringe Druck- und Zugspannungen auftreten und das Elektrolytmaterial bei der Verarbeitung und während des Betriebs der Brennstoffzelle nicht beschädigt wird. Im Allgemeinen soll das Elektrolytmaterial mit Interkonnektoren verwendbar sein, die einen thermischen Ausdehnungskoeffizienten im Bereich von 11,5 - 12,5 * 10$^{-6}$ K$^{-1}$ aufweisen.

Der erfindungsgemäße Elektrolyt soll eine deutlich höhere mechanische Festigkeit als 8YSZ- und 10ScSZ-Elektrolyte aufweisen, insbesondere soll er eine mechanische Festigkeit von mehr als 700 MPa aufweisen, bevorzugt von mehr als 800 MPa, besonders bevorzugt von mehr als 900 MPa, wenn die Bestimmung der mechanischen Festigkeit nach der Doppelringmessmethode der Norm EN 1288-2 erfolgt. In alternativer Weise soll die Elektrolytschicht eine mechanische Festigkeit von mehr als 800 MPa aufweisen, bevorzugt von mehr als 1000 MPa, besonders bevorzugt von mehr als 1200 MPa, wenn die Bestimmung der mechanischen Festigkeit gemäß dem Zylinderbiege-Bruchtest, bezogen auf das unter Zugspannung stehende Volumen eines Elektrolytstreifens von 50 mm x 7,7 mm x 0,090 mm, erfolgt, so dass ähnliche oder nur wenig erhöhte Elektrolytdicken als 90 $\mu$m, d.h. zwischen 50 und 150 $\mu$m, bevorzugt zwischen 70 und 120 $\mu$m, im Brennstoffzellenstapel eingesetzt werden können.

Darüber hinaus soll der erfindungsgemäße Elektrolyt nicht erheblich teurer sein als 3YSZ- oder 8YSZ-basierte Elektrolyte für elektrolytgestützte Zellen.

Um die Brennstoffzellen unter den vorstehenden Bedingungen betreiben zu können, sind Zellen mit einer hohen elektrischen Leistung pro Fläche, insbesondere mit einer Leistung von mehr als 400 mW/cm$^2$ bei 850 °C sowie mit einer hohen elektrischen Leistung pro Zellvolumen erforderlich. Kostengünstige Brennstoffzellen-Systeme zeichnen sich ferner dadurch aus, dass die Interkonnektoren des Brennstoffzellenstapels aus dünnen Blechen ferritischen Stahls gefertigt sind, und dass keine inertisierenden Hilfseinrichtungen zur Verhinderung der Oxidation der Anode im System verwendet werden. Diese beiden Anforderungen, nämlich eine hohe Leistung und mechanische Festigkeit, können nur durch mechanisch ausreichend feste Zellen verwirklicht werden, die im Falle der Reoxidation der Anode durch zugeführte und während des Betriebs der Brennstoffzelle eintretende Luft auf der Anodenseite mechanisch stabil bleiben, und deren elektrochemische Leistung sich nach erneuter Reduktion der Anode vollständig wiederherstellen lässt.

Lösung der Aufgabe

Die erfindungsgemäße Aufgabe wird durch einen Elektrolyten gemäß der Merkmalskombination nach Hauptanspruch gelöst, der im Wesentlichen ein mit Ytterbium(III)oxid (= Yb$_2$O$_3$) dotiertes Zirkonium(IV)oxid (= ZrO$_2$) umfasst, wobei der Anteil des Ytterbium(III)oxids 4,6 bis 5,5 mol-%beträgt, bezogen auf das Zirkonium(IV)oxid. Auf Basis des erfindungsgemäßen Elektrolyten lässt sich eine elektrolytgestützte Brennstoffzelle herstellen, die die geforderte Zellleistung aufweist.

Darüber hinaus werden die geforderten intrinsischen Eigenschaften des Elektrolytmaterials in Bezug auf den thermischen Ausdehnungskoeffizienten und die mechanische Festigkeit durch ein erfindungsgemäßes Sinterverfahren für das Elektrolytmaterial realisiert, bei dem es insbesondere auf die Sintertemperatur, die Haltezeit, während der das Material auf Sintertemperatur gehalten wird, und auf die Geschwindigkeit des Temperaturanstiegs ankommt. Werden die erfindungsgemäßen Bedingungen eingehalten, dann lassen sich die aufgabengemäße Sinterdichte, die spezifische Leitfähigkeit, d.h. die Leistung und die geforderte mechanische Festigkeit erhalten. Durch Verwendung des günstigen Ytterbium(III)oxids, verglichen mit Scandium(III)oxid, lassen sich die Herstellungskosten senken.

**Beschreibung der Erfindung**

Der erfindungsgemäße **Elektrolyt** einer Brennstoffzelle umfasst im Wesentlichen ein mit Ytterbium(III)oxid (= $Yb_2O_3$) dotiertes Zirkonium(IV)oxid (= $ZrO_2$), wobei der Anteil des Ytterbium(III)oxids 4,6 bis 5,5 mol-% oder 4,6 bis 5,5 mol-°/o, bevorzugt 4,8 bis 5,2 mol-%, am meisten bevorzugt 5,0 mol-%, beträgt, jeweils bezogen auf das Zirkonium(IV)oxid.

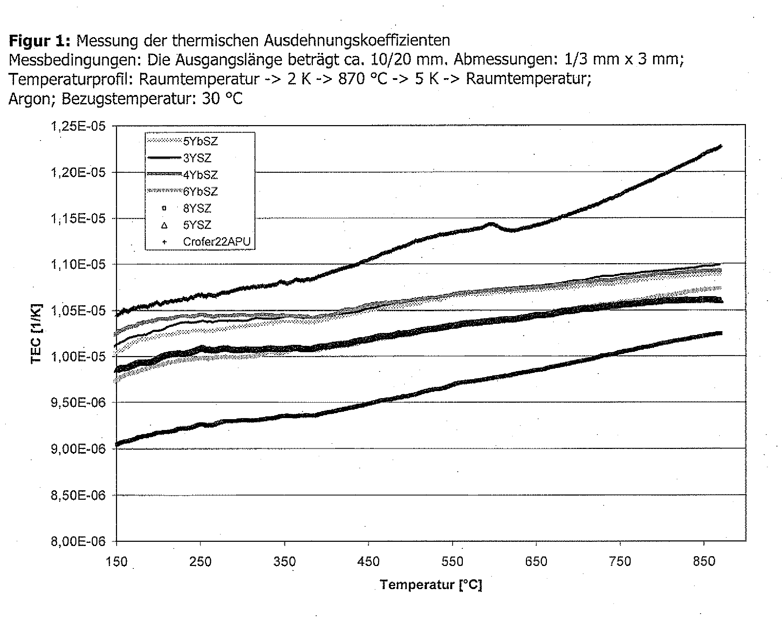

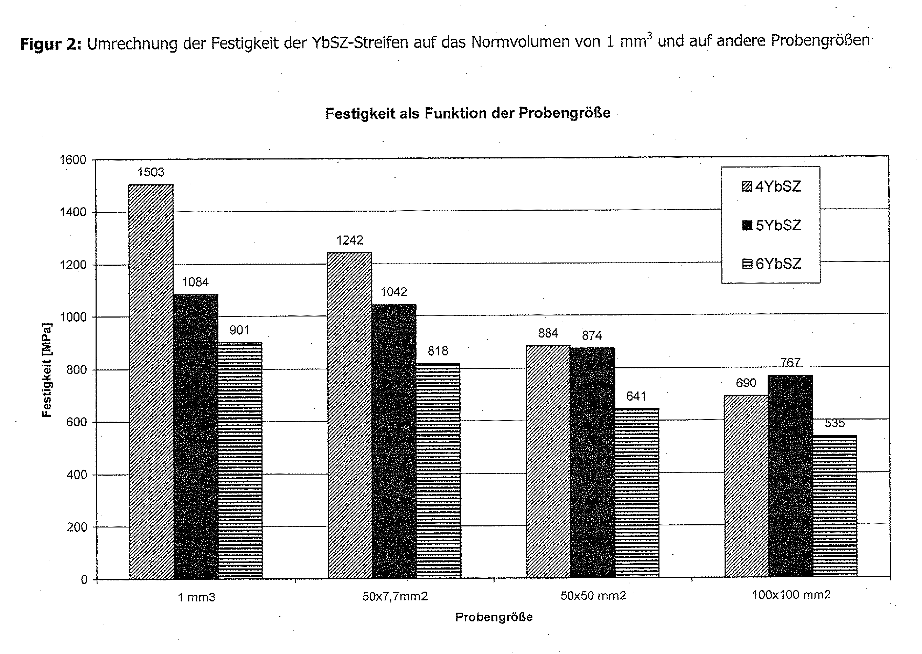

Um eine einwandfreie Verarbeitung mit den Interkonnektoren aus ferritischem Stahl sowie einen störungsfreien Betrieb zu ermöglichen, muss der auf 30°C bezogene thermische Ausdehnungskoeffizient des Elektrolyten (TEC) bei 800 °C im Bereich von $10,6*10^6$ $K^{-1}$ bis $11,2*10^{-6}$ $K^{-1}$, bevorzugt im Bereich von $10,7*10^{-6}$ $K^{-1}$ bis $11,1*10^{-6}$ $K^{-1}$ und besonders bevorzugt im Bereich von $10,8*10^{-6}$ $K^{-1}$ bis $11,0*10^{-6}$ $K^{-1}$ liegen. Im Allgemeinen kann der "technische" thermische Ausdehnungskoeffizient mit Bezugstemperatur T1 und Endtemperatur T2 wie folgt erläutert werden: TEC (T1,T2) = [1/L(T1)]* [L(T2) - L(T1)]/[T2 - T1], wobei L(T1) die Länge der Probe bei der Bezugstemperatur T1, und L(T2) die Länge der Probe bei der Endtemperatur T2 darstellt. In der Abbildung ist dieser TEC als Funktion der Endtemperatur T2 dargestellt (Fig. 1). Die Dicke der Elektrolytschicht liegt im Bereich von 50 bis 150 $\mu$m, bevorzugt im Bereich von 70 bis 120 $\mu$m und besonders bevorzugt im Bereich von 90 bis 100 $\mu$m.

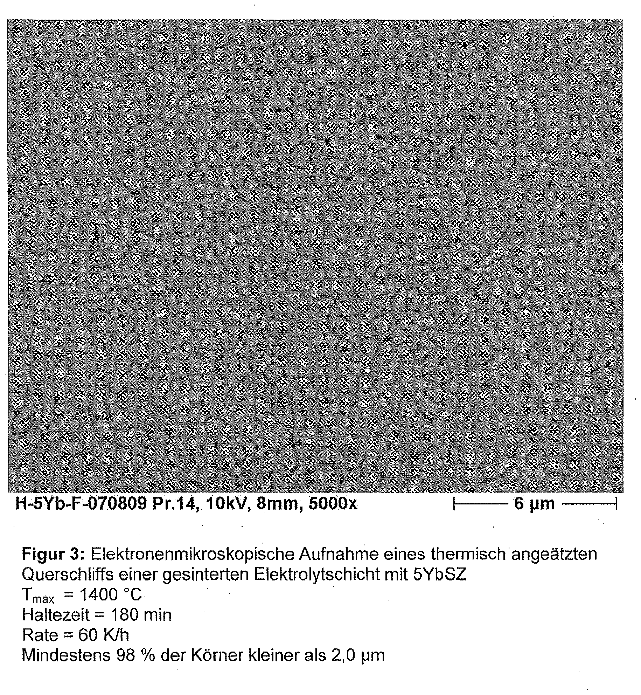

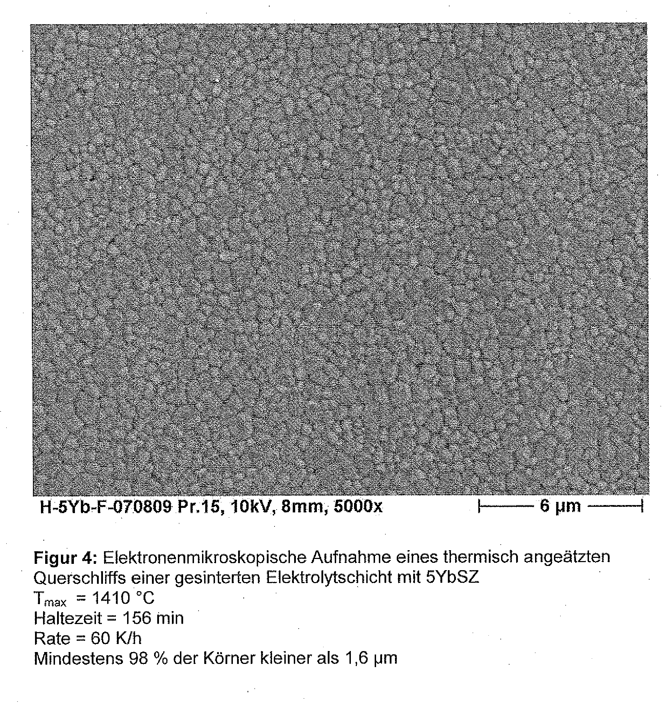

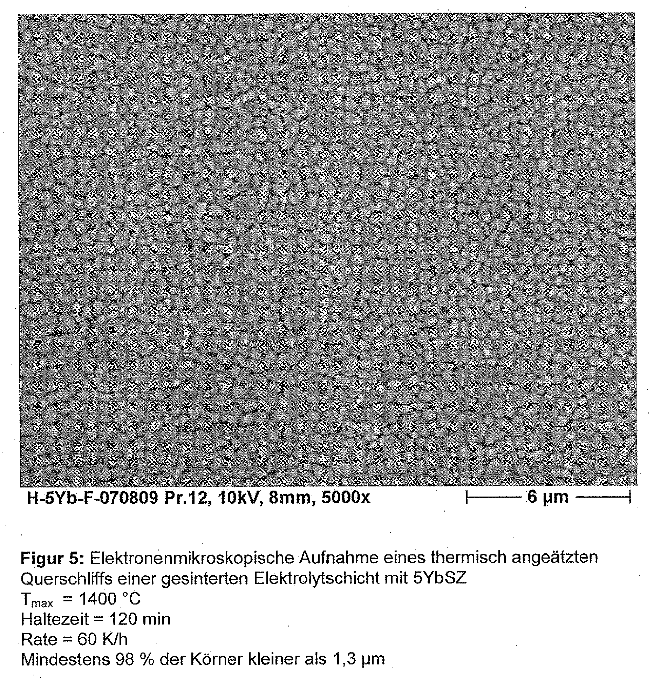

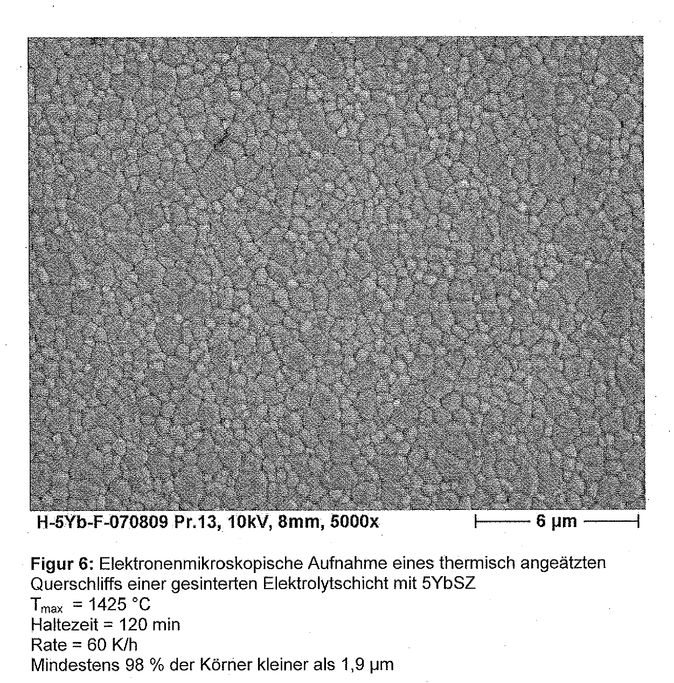

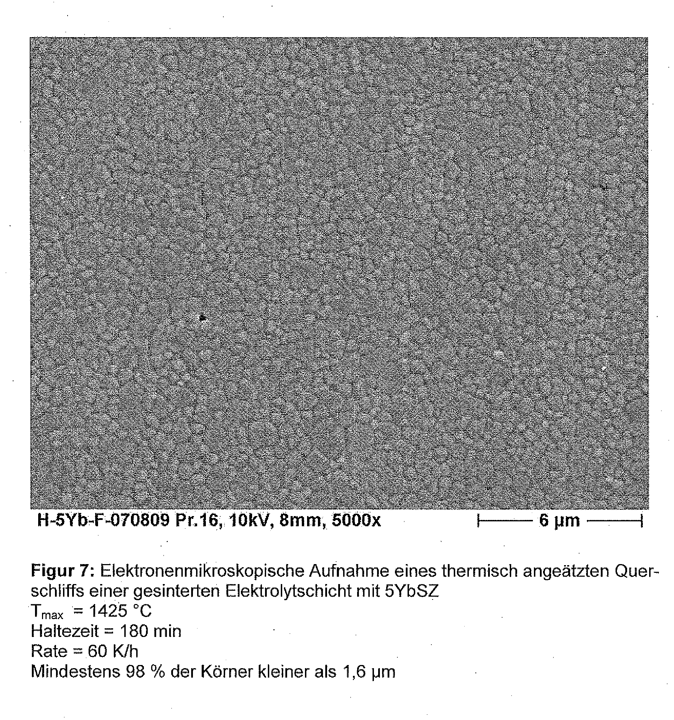

Es wurde gefunden, dass sich eine optimale mechanische Festigkeit der Elektrolytschicht ergibt, wenn bei einer Dotierung des Zirkonium(IV)oxids mit 4,6 bis 5,5 mol-% $Yb_2O_3$, insbesondere mit 4,8 bis 5,2 mol-% $Yb_2O_3$, mindestens 98 % der Körner einen sichtbaren Durchmesser in der elektronenmikroskopischen Aufnahme von weniger als oder gleich 2,0 $\mu$m, bevorzugt weniger als oder gleich 1,6 $\mu$m und besonders bevorzugt weniger als oder gleich 1,3 $\mu$m aufweisen (siehe Fig. 3 bis 8). Der Begriff "sichtbarer Durchmesser in der elektronenmikroskopischen Aufnahme" ist in diesem Zusammenhang wie folgt zu verstehen: Aus einer elektronenmikroskopische Aufnahme eines thermisch geätzten Querschliffs mit einem Bildausschnitt von 20 $\mu$m x 25 $\mu$m wurden die 5 bis 6 größten sichtbaren Korndurchmesser aus den ca. 1000 bis 2000 sichtbaren Korndurchmessern ausgewählt und bezüglich des Durchmessers vermessen. Dabei wird die Größenangabe "kleiner als" so gewählt, dass keiner der sichtbaren Korndurchmesser über der angegebenen Grenze liegt. Der tatsächliche Durchmesser der Körner ist also geringfügig von dem sichtbaren Durchmesser der Körner in der elektronenmikroskopischen Aufnahme verschieden, da in einem thermisch angeätzten Querschliff für eine elektronenmikroskopische Aufnahme die Körner nicht immer entlang des größten Durchmessers geschnitten werden; umgekehrt sind mehr als 1000 Körner geschnitten worden, ohne dass ein einziges Korn mit einem Durchmesser, der oberhalb der angegebenen Grenze liegt, sichtbar geworden wäre.

Die mechanische Festigkeit der Elektrolytschicht beträgt mehr als 700 MPa, bevorzugt mehr als 800 MPa und besonders bevorzugt mehr als 900 MPa, wenn sie nach der Doppelringmessmethode der Norm EN 1288-2 bestimmt wird. In alternativer Weise kann die mechanische Festigkeit gemäß dem Zylinderbiege-Bruchtest bestimmt werden, die auf das unter Zugspannung stehende Volumen eines Elektrolytstreifens von 50 mm x 7,7 mm x 0,090 mm bezogen ist; in diesem Fall betragen die Werte für die mechanische Festigkeit mehr als 800 MPa, bevorzugt mehr als 1000 MPa und besonders bevorzugt mehr als 1200 MPa. Bei der Prüfung nach letzterem Verfahren beträgt die Dicke der Prüfkörper ca. 90 bis 95 $\mu$m, von denen beim Biegen die eine Hälfte unter Zugspannung und die andere Hälfte unter Druckspannung steht. Als Bezugsvolumen für die Bestimmung der Festigkeit ist nur der unter Zugspannung stehende Anteil, d.h. rechnerisch genau 45 bis 47,5 $\mu$m, zu berücksichtigen.

Der flächenspezifische Zellwiderstand, ausgedrückt in $\Omega cm^2$, (Ohm * Quadratzentimeter), engl. als ASR=Area Specific Resistance bezeichnet, setzt sich aus einem Beitrag der Elektroden und einem Beitrag des Elektrolyten zusammen. Ein höherer ASR ist gleich bedeutend mit einer niedrigeren Zellleistung pro Fläche in $Wcm^{-2}$ bzw. 0,7 $Acm^{-2}$ bei gegebener Arbeitsspannung von 0,7 V, und umgekehrt. Ein möglichst niedriger Beitrag des Elektrolyten zum flächenbezogenen Zellwiderstand, ASR, durch eine herstellungsbedingt optimierte Wirksamkeit des eingesetzten Dotiermittels ergibt sich, wenn der Quotient aus Leitfähigkeit, gemessen in S/m bei 850°C, und Konzentration des Dotiermittels in mol-% einen Wert von größer oder gleich 1,0 S/(m mol-%), bevorzugt von größer oder gleich 1,05 S/(m mol-%) und besonders bevorzugt von größer oder gleich 1,075 S/(m mol-%) annimmt.

Eine Zelle, hergestellt mit einem erfindungsgemäßen Elektrolyten weist bei 850°C einen spezifischen Flächenwiderstand von kleiner oder gleich 0,4 $\Omega cm^2$, bevorzugt kleiner oder gleich 0,36 $\Omega cm^2$, und besonders bevorzugt kleiner oder gleich 0,32 $\Omega cm^2$ auf.

Die erfindungsgemäße Verwendung des Ytterbium(III)oxids als Dotierungsmittel für Zirkonium(IV)oxid bei vergleichbaren oder besseren Eigenschaften der Zelle stellt eine preiswerte Alternative für das bisher verwendete teure Scandium(III)oxid dar; der Preis für Scandium(III)oxid beträgt rund das 65-fache des Preises für Ytterbium(III)oxid. Somit kann die Verwendung des teuren Scandium(III)oxids entfalten.

Die Dicke der Elektrolytschicht hat einen Einfluss auf die mechanische Stabilität, d.h. auf die absolute Kraft, die zum Brechen der Schicht nötig ist. Sie hat ferner Einfluss auf die mechanische Spannung im Stapel, weiche von der Temperatur abhängig ist. Bei hoher Temperatur ist die Spannung der Keramik maßgebend, da der Stahl sich bei hohen Temperaturen plastisch verformt; bei tiefen Temperaturen zieht sich der Stahl aufgrund seines höheren thermischen Ausdehnungskoeffizienten stärker zusammen als die Keramik und folglich ist die Spannung des Stahls bestimmend. Schließlich beeinflusst die Dicke den Widerstand in dem Sinne, dass die Leitfähigkeit bzw. die Leistung umso größer werden, je dünner die Elektrolytschicht gestaltet wird; wird die Elektrolytschicht jedoch dünn ausgeführt, erfolgt dies auf Kosten der mechanischen Stabilität. Die bevorzugte Dicke der Elektrolytschicht von 50 - 150 $\mu$m, insbesondere von 70 - 120 $\mu$m, ist optimiert für Interkonnektoren aus ferritischem Stahl.

Die aus dem erfindungsgemäßen Elektrolyten herstellbare Brennstoffzelle umfasst ferner eine Anode und eine Kathode, welche nachfolgend in Einzelheiten beschrieben werden.

Die **Anode** der erfindungsgemäßen elektrolytgestützten Brennstoffzelle umfasst drei Schichten.

Die **erste Schicht der Anode** stellt eine dünne Haftschicht dar. Diese Haftschicht umfasst Ceroxid, wobei das Ceroxid mit Gadolinium(III)oxid dotiert ist und mit Kobaltoxid versehen ist. Der Anteil des Gadolinium(III)oxids (= $Gd_2O_3$) in der dünnen Haftschicht beträgt 5 - 25 mol-%, besonders bevorzugt 15 bis weniger als 20 mol-%, - bezogen auf das Ceroxid. Der Anteil des Kobaltoxids in der dünnen Haftschicht aus Ceroxid beträgt 1 - 2 Gew.-%, bezogen auf das Ceroxid. Die Dicke dieser ersten Haftschicht aus Ceroxid liegt im Bereich von 1- 5 $\mu$m, bevorzugt im Bereich von 2 - 4 $\mu$m.

Die **zweite Schicht der Anode** stellt eine elektrochemisch aktive Funktionsschicht dar. Sie kann eine Mischung von Nickel(II)oxid und Ceroxid umfassen, wobei das Ceroxid mit Gadolinium(III)oxid dotiert ist. In der Mischung von Nickel(II)oxid und Ceroxid liegt der Anteil des Nickel(II)oxids im Bereich von 50 - 70 Gew.-%, bezogen auf das Gesamtgewicht der Mischung. Die Dicke der zweiten Schicht der Anode beträgt 10-40 $\mu$m und bevorzugt 15-30 $\mu$m.

Alternativ kann als elektrochemisch aktive Anodenschicht eine Mischung aus Nickel(II)-oxid mit Zirkonium(IV)oxid eingesetzt werden, wobei das Zirkonium(IV)oxid mit 8 bis 10 mol-% Yttrium(III)oxid dotiert ist, bezogen auf das Zirkonium(IV)oxid. Eine weitere Alternative für die elektrochemisch aktive Anodenschicht stellt eine Mischung aus Nickel(II)oxid und Zirkonium(IV)oxid dar, wobei das Zirkonium(IV)oxid mit 7 bis 10 mol-% Ytterbium(III)oxid dotiert ist, bezogen auf das Zirkonium(IV)oxid. Der Anteil des Nickel(II)oxids liegt in beiden Fällen im Bereich von 50 bis 70 Gew.-%. Die Dicke der zweiten Schicht der Anode beträgt 10 bis 40 $\mu$m und bevorzugt 15 bis 30 $\mu$m.

Die **dritte Schicht der Anode** stellt die Kontaktschicht dar, welche mindestens 85 Gew.-% Nickel(II)oxid umfasst. Die Dicke der dritten Schicht der Anode beträgt 5-25 $\mu$m und bevorzugt 10-20 $\mu$m. Die Kontaktschicht enthält optional bis zu 15 Gew.-%, meist 2 bis 15 Gew.-%, insbesondere 3 bis 10 Gew.-% eines Strukturstabilisators, welcher die Vergröberung des Nickeloxids verlangsamt. Geeignete Strukturstabilisatoren sind beispielsweise Magnesiumoxid, Yttrium-dotiertes Zirkonoxid (insbesondere 8YSZ), sowie Gadolinium(III)oxid dotiertes Ceroxid-Pulver (insbesondere mit 5 mol% Gadolinium(III)oxid dotiertes Ceroxid-Pulver, 5GCO).

Die **Kathode** umfasst zwei Schichten:

Die **erste Schicht der Kathode** stellt eine elektrochemisch aktive Funktionsschicht dar. Sie kann eine Mischung aus Lanthan-Strontium-Mangan-Oxid (= LSM) und Zirkonium(IV)oxid umfassen, wobei das Zirkonium(IV)oxid mit 8 - 10 mol-% Yttrium(III)-oxid, bezogen auf das Zirkonium(IV)oxid, dotiert ist. Der Anteil des Lanthan-Strontium-Mangan-Oxids (= LSM) an der gesamten Mischung beträgt 45 - 55 Gew.-%. Als eine Alternative zu dem mit 8 - 10 mol-% Yttrium(III)oxid dotierten Zirkonium(IV)oxid kann ein Zirkonium(IV)oxid verwendet werden, das mit 4 - 10 mol-% Ytterbium(III)oxid, bevorzugt mit 7 - 10 mol-% Ytterbium(III)oxid dotiert ist.

Die **zweite Schicht der Kathode** stellt die Kathodenkontaktschicht dar und umfasst Lanthan-Strontium-Mangan-Oxid (= LSM). Ihre Dicke beträgt 25 - 50 $\mu$m.

### Herstellung des Elektrolyten

Zunächst werden durch Foliengießen dünne Schichten aus einem Gießschlicker hergestellt, die anschließend zu Elektrolyten gesintert werden.

### Folienherstellung

Zur Herstellung eines Gießschiickers wird beispielsweise 50 Gew.-% eines mit 5 mol-% $Yb_2O_3$-dotierten Zirkonium(IV)oxid-Pulvers, und 50 Gew.-% einer Bindersuspension, beispielsweise die von der Fa. Ferro angebotene, fertig formulierte Bindersuspension B-73208, verwendet.

Die Bindersuspension FERRO B-73208 wird in einem gekühlten Mahlbehälter vorgelegt und das 5YbSZ - Pulver mit einem Dissolver in die Bindersuspension eingerührt, so dass eine homogene Mischung resultiert. Der Dissolver wurde im nächsten Schritt gegen eine Korbmühle, die mit teilstabilisierten Zirkonium(IV)oxid-Mahlperlen gefüllt wurde, ausgetauscht. Die hergestellte Schlickermischung wurde mit der Korbmühle gemahlen, bis alle Agglomerate zerkleinert wurden. Die Mahlwirkung wurde durch mehrere Grindometertests kontrolliert. Der Energieeintrag wurde so eingestellt, dass die Schlickertemperatur von 35 °C nicht überschritten wurde. Danach wurde der hergestellte Schlicker in einen sauberen 10 l umfassenden Kugelmühlenbehälter, der mit Polyamid ausgekleidet ist, eingefüllt, um den Schlicker weiter auf einem Rollerbock zu homogenisieren. Die Kugelmühle wurde vorher mit 14,7 kg teilstabilisierten Zirkonium(IV)oxid-Mahlkörpern gefüllt. Der Schlicker wurde auf dem Rollerbock bei 60 U/min für 48 h gerollt.

Der fertige Schlicker wurde aus der Kugelmühle durch einen SPOTEX-Filter (150 $\mu$m) in den Gießdruckbehälter filtriert. Danach wurde der Schlicker beim gleichzeitigen Rühren entgast. Der entgaste Schlicker wurde auf der Foliengießmaschine der Fa. KEKO auf eine Trägerfolie in 125 $\mu$m Dicke vergossen. Der Schlicker wurde vor dem Einfüllen in den Gießschuh noch einmal mit einem SPOTEX-Filter (75 $\mu$m) filtriert. Durch die Verwendung der Filter werden undispergierte Pulveragglomerate und agglomerierte Binderbestandteile entfernt, so dass festigkeitsmindernde Gefügefehler minimiert werden. Die Trocknungsparameter wurden im Laufe des Gießvorgangs so angepasst, dass die gegossene Folie trocken wurde und auf eine Rolle aufgewickelt wurde.

Die hergestellte Folie weist folgende Eigenschaften auf:

- Tapedichte = 3,36 $\pm$ 0,02 g/cm$^3$
- max. Zugfestigkeit = 7,8 $\pm$ 0,1 MPa
- Dehnung bei max. Zugfestigkeit = 43,0 $\pm$ 0,8 %
- Glühverlust bei 600 °C an Luft = 17,4 Masse.%

Die hergestellte Folie wurde von der Rolle in größere Stücke geschnitten. Aus den Stücken wurden runde Proben für die nach dem Sintern erfolgenden Messungen der Sinterdichte und der mechanischen Bruchfestigkeit bzw. quadratische Proben für die nach dem Sintern erfolgenden Messungen der elektrischen Leitfähigkeit im grünen Zustand gelasert. Die Folien-Stücke wurden einzeln zwischen zwei Setterplatten entbindert und gesintert.

## Sintern

Die Sintertemperatur und -Dauer ist so zu wählen, dass einerseits eine möglichst geringe Porosität, andererseits ein möglichst geringes Kornwachstum erzielt wird, so dass hohe Leitfähigkeiten und Festigkeiten resultieren, wie sie vorstehend beschrieben wurden. Diese Bedingungen können durch Verwendung eines geeigneten, mit Ytterbium(III)oxid dotierten Zirkonium(IV)oxid-Pulvers bei einer Sintertemperatur von 1400 bis 1550 °C, bevorzugt von 1400 bis 1475 °C, besonders bevorzugt 1400 bis 1445 °C verwirklicht werden. Die Sinterdauer beträgt im Allgemeinen 15 bis 600 min, bevorzugt 60 bis 180 min, besonders bevorzugt 60 bis 120 min.

Speziell bei einer Sintertemperatur von 1475 bis 1550 °C ist die Sinterdauer bevorzugt aus dem Bereich von 15 bis 60 Minuten zu wählen, bei einer Sintertemperatur von 1445°C, bis 1475°C, ist die Sinterdauer bevorzugt aus dem Bereich von 60 bis 180 min zu wählen, und bei einer Sintertemperatur 1400 °C bis 1445 °C ist die Sinterdauer bevorzugt aus dem Bereich von 120 und 600 min zu wählen.

Der Einfluss der Sinterbedingungen auf die Sinterdichte, die Leitfähigkeit und Festigkeit, die RoR-Bruchfestigkeit sind in den Tabellen 1 und 2 dargestellt.

Danach wurden die runden Proben aus dem gesinterten Substrat ausgebrochen und den Messungen der Sinterdichte und der mechanischen Bruchfestigkeit zugeführt. Aus den quadratischen gesinterten Substraten wurden mit einer Wafer-Säge definierte schmale Streifen gesägt und deren elektrische Leitfähigkeit mit der Vierpunkt-Gleichstrommethode gemessen.

In den erfindungsgemäß hergestellten Elektrolyten mit einer Dotierung von 4,8 bis 5,2 mol-% $Yb_2O_3$ weisen mindestens 98 % der Körner einen Durchmesser von weniger als 2 $\mu$m, bevorzugt von weniger als 1,6 $\mu$m, besonders bevorzugt von weniger als 1,3 $\mu$m, auf.

Für die weitere Beschichtung mit den Elektroden durch Siebdrucken wurden Elektrolyte von 5 cm x 5 cm Größe eingesetzt.

## Zylinderbiege-Bruchtest

Zur Bestimmung der Biegebruchfestigkeit von dünnen $Yb_2O_3$-dotierten Zirkonium(IV)-oxid-Elektrolyten wurde der sog. Zylinderbiege-Bruchtest eingesetzt. Dabei wurden Elektrolytproben von 50 mm x 7,7 mm Länge x Breite und ca. 95 $\mu$m Dicke $h$ um verschiedene Kunststoffzylinder abnehmenden Durchmessers gebogen, bis die Probe nicht stärker gebogen werden konnte und brach. Dieser Radius R wurde als maximaler Biegebruchradius bestimmt und unter der Annahme eines E-Moduls des $Yb_2O_3$-dotierten Zirkonium(IV)oxids von E'=200 GPa, was dem typischen Wert von

Y$_2$O$_3$-dotierten Zirkonium(IV)oxid entspricht, gemäß folgender Formel die maximale Biegebruchspannung σ$^{max}_L$ ermittelt:

$$\sigma_L^{\max}(z) = E' \cdot \frac{h}{R}$$

Auf diese Weise wurden von je 20 Proben einer Elektrolytcharge die Biegebruch-spannungen bestimmt und die Werte gemäß der Weibull-Verteilung aufgetragen, so dass Biegebruchfestigkeit σ$_0$ und Weibull-Modul m bestimmt werden konnten. Als beanspruchtes Volumen wurde die Hälfte des Streifenvolumens Vangenommen und gemäß nachstehender Formel auf ein Normvolumen *V'* von 1 mm$^3$ bzw. typische Elektrolytvolumina für Zellabmessungen von 5 cm x 5 cm und 10 cm x 10 cm.umgerechnet, wobei ξ und ξ' die Spannungen sind, bei welcher der Anteil F, hier 63,2%, der Proben bricht:

$$\varsigma'(F,V') = \left(\frac{V}{V'}\right)^{1/m} \cdot \varsigma(F,V)$$

Aus dem gesinterten Elektrolyten werden zur Herstellung einer elektrolytgetragenen Zelle die verschiedenen Anoden- und Kathodenschichten durch Siebdruck und anschließendes Co-Sintern aufgebracht.

Zur Verhinderung von Verwölbungen aufgrund der geringen Dicke des Elektrolyten und der unterschiedlichen thermischen Ausdehnungskoeffizienten des Anoden- und Kathodenmaterials einerseits sowie des Elektrolyten andererseits müssen Anode und Kathode in einem einzigen Sinterschritt so eingebrannt werden, dass eine gute Haftung von Anode und Kathode resultiert. Eine optimale Leistung der Zelle bei guter Haftung der Elektroden erreicht man nur, wenn das Einbrennen der Elektroden bei einer Temperatur von 1175 °C bis 1275 °C, bevorzugt von 1200 °C bis 1250 °C, stattfindet.

**Tabelle 1:** Leitfähigkeit des Elektrolyten als Funktion der Yb$_2$O$_3$-Konzentration im Zirkonium(IV)oxid: Die Tabelle 1 gibt den Zusammenhang zwischen der Dotierung des Zirkonium(IV)oxids mit Ytterbium(III)oxid, den Parametern für die Sinterung, nämlich der Sintertemperatur und der Haltezeit, während der das Sintergut bei der Sintertemperatur gehalten wird, und der Leitfähigkeit bei verschiedenen Betriebstemperaturen an. Der Quotient aus der Leitfähigkeit bei 850 °C [S/m] und der Dotierung mit Ytterbium(III)oxid [mol-%] ist ein Maß für die zu erwartende Leistung der Brennstoffzelle pro eingesetzter Stoffmenge des Ytterbium(III)oxids.

| Konz. Yb$_2$O$_3$ [mol-%] | Sinterung Zeit/Temperatur | Leitfähigkeit bei | | | Quotient aus Leit fähigkeit bei 850°C, [S/m]/Konz. Yb$_2$O$_3$ [mol-%] |
|---|---|---|---|---|---|
| | | 800 °C | 850 °C | 900 °C | |
| 4,12 | 30min/1500°C | 2,92 | 4,05 | 5,65 | 0,983 |
| 4,12 | 30min/1530°C | 2,92 | 4,14 | 5,77 | 1,005 |
| 4,12 | 1h/1500°C | 2,96 | 4,21 | 5,71 | 1,022 |
| 4,12 | 2h/1475°C | 2,92 | 4,17 | 5,73 | 1,012 |
| 4,12 | 4h/1450°C | 2,83 | 4,05 | 5,54 | 0,983 |
| 5,96 | 1h/1500°C | 4,8 | 6,85 | 9,3 | 1,149 |
| 5,96 | 1h/1450°C | 4,75 | 6,79 | 9,28 | 1,139 |

**Tabelle 2:** Einfluss der Sinterbedingungen auf die Eigenschaften von 4,96 mol% $Yb_2O_3$ dotierten Zirkonium(IV)oxid (Sintertemperatur in Grad Celsius; Haltezeit, während das zu sinternde Elektrolytmaterial bei der Sintertemperatur gehalten wird in Minuten; und Geschwindigkeit des Temperaturanstiegs in Kelvin/Stunde) auf die Materialeigenschaften, d.h. die Sinterdichte, die spezifische elektrische Leitfähigkeit und die mechanische Festigkeit, welche als Weibull-Modul$_{mk}$ und als o $(RoR)_0$ angegeben ist.

| Lfd. Nr Temp | Sinterbedingungen Temp [°C] Zeit [min] Geschw. [K/h] | | | Sinterdichte [g/cm³] | Weibull-modul$_{mk}$ | | | Festigkeit $\sigma$ $(RoR)_0$ nach EN 1288-2 | | | Elektrische Leitfähigkeit bei 850 °C [S/m] | Quotient aus Leitfähigkeit bei 850°C [S/m]/Konz. $Yb_2O_3$ [mol-%] |
|---|---|---|---|---|---|---|---|---|---|---|---|---|
| 1 | 1400 | 15 | 60 | 6,438 ± 0,008 | 6,1 | + 2,3 | - 1,4 | 916 | + 52 | - 49 | 5,07 ± 0,07 | 1,022 |
| 2 | 1475 | 60 | 120 | 6,458 ± 0,010 | 6,0 | + 2,2 | - 1,3 | 858 | + 38 | - 37 | 5,40 ± 0,02 | 1,089 |
| 3 | 1550 | 105 | 180 | 6,456 ± 0,006 | 7,4 | + 2,7 | - 2,0 | 774 | + 45 | - 42 | 5,19 ± 0,03 | 1,044 |
| 4 | 1475 | 60 | 120 | 6,455 ± 0,007 | 7,2 | + 2,6 | - 1,6 | 842 | + 41 | - 39 | 5,22 ± 0,04 | 1,052 |
| 5 | 1400 | 105 | 180 | 6,446 ± 0,009 | 7,1 | + 2,6 | - 1,6 | 966 | + 85 | - 75 | 5,16 ± 0,07 | 1,040 |
| 6 | 1550 | 105 | 60 | 6,459 ± 0,003 | 4,6 | + 1,7 | - 1,1 | 785 | + 44 | - 42 | 5,26 ± 0,03 | 1,060 |
| 7 | 1400 | 15 | 180 | 6,418 ± 0,009 | 6,0 | + 2,3 | - 1,4 | 851 | + 42 | - 39 | 4,99 ± 0,03 | 1,006 |
| 8 | 1550 | 15 | 180 | 6,462 ± 0,004 | 4,7 | + 1,7 | - 1,1 | 801 | + 38 | - 36 | 5,30 ± 0,01 | 1,069 |
| 9 | 1550 | 15 | 60 | 6,461 ± 0,006 | 5,6 | + 2,1 | - 1,3 | 843 | + 32 | - 30 | 5,35 ± 0,04 | 1,079 |
| 10 | 1400 | 105 | 60 | 6,452 ± 0,006 | 5,7 | + 2,1 | - 1,3 | 967 | + 44 | - 42 | 5,27 ± 0,04 | 1,063 |
| 11 | 1475 | 60 | 120 | 6,460 ± 0,003 | 7,1 | + 2,6 | - 1,6 | 915 | + 39 | - 37 | 5,34 ± 0,02 | 1,077 |
| 12 | 1400 | 120 | 60 | | 4,5 | + 1,6 | - 1,1 | 717 | + 51 | - 47 | 5,31 ± 0,00 | 1,071 |

(fortgesetzt)

| Lfd. Nr Temp | Sinterbedingungen Temp [°C] Zeit [min] Geschw. [K/h] | | | Sinterdichte [g/cm³] | Weibull-modul$_{mk}$ | | | Festigkeit $\sigma$ (RoR)$_0$ nach EN 1288-2 | | | Elektrische Leitfähigkeit bei 850 °C [S/m] | Quotient aus Leitfähigkeit bei 850°C [S/m]/Konz. Yb$_2$O$_3$ [mol-%] |
|---|---|---|---|---|---|---|---|---|---|---|---|---|
| 13 | 1425 | 120 | 60 | | 5,6 | + 2,1 | - 1,3 | 722 | + 39 | - 37 | 5,37 ± 0,00 | 1,083 |
| 14 | 1400 | 180 | 60 | | 4,1 | + 1,5 | - 1,0 | 735 | + 46 | - 43 | 5,43 ± 0,00 | 1,095 |
| 15 | 1410 | 156 | 60 | | 4,7 | + 1,7 | - 1,1 | 715 | + 42 | - 40 | 5,32 ± 0,00 | 1,073 |
| 16 | 1425 | 180 | 60 | | 4,2 | + 1,6 | - 1,0 | 758 | + 37 | - 35 | 5,44 ± 0,00 | 1,097 |

Die laufende Nummer 14 entspricht Fig. 3; die laufende Nummer 15 entspricht Fig. 4; die laufende Nummer 12 entspricht Fig. 5; die laufende Nummer 13 entspricht Fig. 6; und die laufende Nummer 16 entspricht Fig. 7.

Herstellung einer **Anodenhaftschicht**-Siebdruckpaste: 50 Gew.-% mit 20 mol-% $Gd_2O_3$ dotiertem Ceroxid-Pulver, z.B. der Fa. Praxair, das daneben 1 bis 2 Gew.-% Kobaltoxid enthalten kann, und 50 Gew.-% eines Bindemittels, das im Wesentlichen aus Ethylcellulose und Terpineol besteht, werden in einem Mahlbehälter zusammengegeben, in einer Perlmühle deagglameriert und anschließend auf einem Walzenstuhl zu einer sehr feinen Paste homogenisiert. Die Paste wird mit einem sehr feinen Sieb gedruckt, so dass die getrocknete Schicht eine Dicke von ca. 5 μm aufweist.

Herstellung einer **Anodenfunktionsschicht**-Siebdruckpaste: 63 Gew.-% einer Mischung, die 65 Gew.-% NiO und 35 Gew.-% mit 5 mol-% $Gd_2O_3$ dotiertem Ceroxid-Pulver, wie es von der Fa. Praxair angeboten wird, und 37 Gew.-% eines Bindemittels, das im Wesentlichen aus Ethylcellulose und Terpineol besteht, werden in einem Kneterbehälter zusammengegeben und anschließend auf einem Walzenstuhl zu einer Paste homogenisiert. Die Paste wird mit einem mittelfeinen Sieb verdruckt, so dass die getrocknete Schicht eine Dicke von ca. 30 μm aufweist.

Herstellung einer **Anodenkontaktschicht**-Siebdruckpaste: Aus 63 Gew.-% einer Mischung, die 95 Gew.-% NiO-Pulver und 5 Gew.-% mit 5 mol% Gadolinium(III)oxid - dotiertes Ceroxid-Pulver umfasst, und 37 Gew.-% eines Bindemittels, das im Wesentlichen aus Ethylcellulose und Terpineol besteht, wird auf einem Walzenstuhl eine Paste hergestellt. Die Paste wird mit einem mittelfeinen Sieb gedruckt, so dass die getrocknete Schicht eine Dicke von ca. 15 μm aufweist.

Herstellung einer Paste für eine **Kathodenfunktionsschicht**: Aus 60 Gew.-% einer Mischung, die 50 Gew.-% Lanthan-Strontium-Manganit-Pulver, wie es von der Fa. H.C. Starck angeboten wird, und 50 Gew.-% 8YSZ, wie es von der Fa. Tosoh angeboten wird, umfasst, und 40 Gew.-% eines Bindemittels, das im Wesentlichen aus Ethylcellulose und Terpineol besteht, wird auf einem Walzenstuhl eine Paste hergestellt. Die Paste wird mit einem groben Sieb gedruckt, so dass die getrocknete Schicht eine Dicke von ca. 30 μm aufweist.

Herstellung einer Paste für eine **Kathodenkontaktschicht:** Aus 60 Gew.-% Lanthan-Strontium-Manganit-Pulver, wie es von der Fa. H.C. Starck angeboten wird, und 40 Gew.-% eines Bindemittels, das im Wesentlichen aus Ethylcellulose und Terpineol besteht, wird auf einem Walzenstuhl eine Paste hergestellt. Die Paste wird mit einem groben Sieb gedruckt, so dass die getrocknete Schicht eine Dicke von ca. 30 μm aufweist.

Alle nachfolgenden Ausführungsbeispiele von Zellen mit erfindungsgemäßen Elektrolyten und von 3YSZ-Elektrolyten vom Stand der Technik wurden mit diesen Pasten nach der oben beschriebenen Prozedur hergestellt. Zuerst werden die drei Anoden- und dann die zwei Kathodenschichten in einer Größe von 4 cm x 4 cm gedruckt. In den nachfolgenden Beispielen werden die Elektrolytsubstrate und Co-Sinterbedingungen variiert.

Von den Zellen wird in einem speziellen Aluminumoxid-Gehäuse mit einem Brenngasgemisch 50% Wasserstoff und 50% Wasser bei 850°C eine Strom-Spannungskennlinie aufgenommen. Der Brenngasfluss zur Anode beträgt 20 Normliter/Stunde; der Kathode werden 40 Normliter/Stunde Luft zugeführt. Die Steigung der Kurve Spannung-Stromdichte entspricht dem spezifischen Flächenwiderstand der Zelle.

Aus den elektrolytgestützten planaren Brennstoffzellen, basierend auf den erfindungsgemäßen Elektrolyten, und Interkonnektoren aus ferritischen Fe-Cr-Legierungen, wie z.B Crofer22APU der Fa. ThysenKrupp VDM oder ITM der Fa. Plansee, mit typischerweise 18-25% Chrom und einem TEC, der typischerweise zwischen 11,5 * $10^{-6}$ $K^{-1}$ und 12,5 * $10^{-6}$ $K^{-1}$ liegt, können gemäß dem Stand der Technik, z.B. dargelegt in WO 2005/011 040 A2, oder in WO 2005/013 390 A2, planare Brennstoffzellenstapel hergestellt werden. Die Verwendung elektrolytgestützter Zellen mit hoher Leistung und hoher mechanischer Festigkeit, basierend auf einem erfindungsgemäßen Elektrolyten, ist dabei gegenüber dem Stand der Technik, nämlich der Verwendung von Zellen basierend auf 3YSZ-Elektrolyten, vorzuziehen.

**Ausführungsbeispiele**

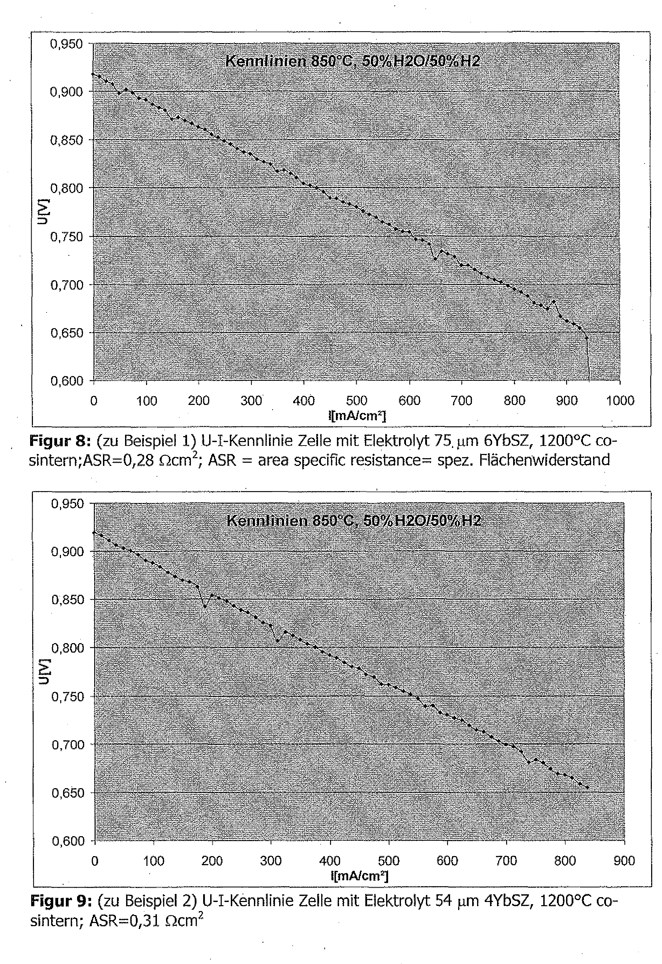

Beispiel 1 (Figur 8):

Es wird ein erfindungsgemäßer Elektrolyt, bestehend aus 75 μm dickem, mit 5,96 mol-% $Yb_2O_3$ dotiertem Zirkonium(IV)oxid, welche Elektrolytschicht bei 1500 °C für 30 min gesintert wurde und eine Festigkeit von ca. 800 MPa (Streifen im Zylinderbiege-Bruchtest) sowie einen Quotienten von Leitfähigkeit und Dotiermittelkonzentration von 1,11 aufweist, gemäß der oben beschriebenen Art und Weise mit den oben beschriebenen Elektrodenpasten beschichtet und diese bei 1200°C eingebrannt. Es resultiert eine Zelle mit einem Flächenwiderstand von 0,28 Ωcm².

Beispiel 2 (Figur 9):

Es wird ein erfindungsgemäßer Elektrolyt, bestehend aus 54 μm dickem, mit 4,12 mol-% $Yb_2O_3$ dotiertem Zirkonium(IV)oxid, welche Elektrolytschicht bei 1500 °C für 60 min gesintert wurde und eine Festigkeit von ca. 1240 MPa (Streifen im Zylinderbiege-Bruchtest) sowie einen Quotienten von Leitfähigkeit und Dotiermittelkonzentration von 1,02 aufweist, gemäß der oben beschriebenen Art und Weise mit den oben beschriebenen Elektrodenpasten beschichtet und diese bei 1200°C, eingebrannt. Es resultiert eine Zelle mit einem Flächenwiderstand von 0,31 Ωcm².

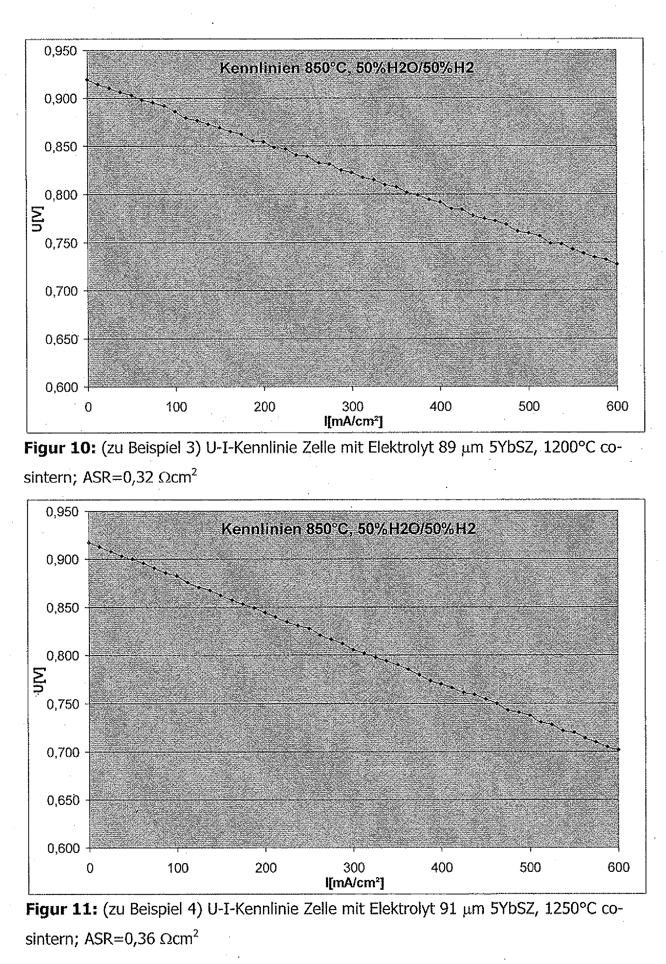

Beispiel 3 (Figur 10):

Ausgangsmaterial ist eine erfindungsgemäße Elektrolytschicht, die aus 89 $\mu$m dickem, mit 4,96 mol-% $Yb_2O_3$ dotiertem Zirkonium(IV)oxid besteht, welche Elektrolytschicht bei 1500 °C für 60 min gesintert wurde und eine Festigkeit von ca. 1040 MPa (Streifen im Zylinderbiege-Bruchtest) sowie einen Quotienten von Leitfähigkeit und Dotiermittelkonzentration von 1,06 aufweist. Zusätzlich weisen mindestens 98% der Körner der Elektrolytschicht einen maximalen Durchmesser von 1,8 $\mu$m auf. Dann wurde die Elektrolytschicht gemäß der oben beschriebenen Art und Weise mit den oben beschriebenen Elektrodenpasten beschichtet und diese bei 1200°C eingebrannt. Es resultiert eine Zelle mit einem Flächenwiderstand von 0,32 $\Omega$cm$^2$.

Beispiel 4 (Figur 11):

Ausgangsmaterial ist eine erfindungsgemäße Elektrolytschicht, die aus 91 $\mu$m dickem, mit 4,96 mol-% $Yb_2O_3$ dotiertem Zirkonium(IV)oxid besteht, welche Elektrolytschicht bei 1500 °C für 60 min gesintert wurde und eine Festigkeit von ca. 1040 MPa (Streifen im Zylinderbiege-Bruchtest) sowie einen Quotienten von Leitfähigkeit und Dotiermittelkonzentration von 1,06 aufweist. Zusätzlich weisen mindestens 98% der Körner der Elektrolytschicht einen maximalen Durchmesser von 1,8 $\mu$m auf. Dann wurde die Elektrolytschicht gemäß der oben beschriebenen Art und Weise mit den oben beschriebenen Elektrodenpasten beschichtet und diese bei 1250°C eingebrannt. Es resultiert eine Zelle mit einem Flächenwiderstand von 0,36 $\Omega$cm$^2$.

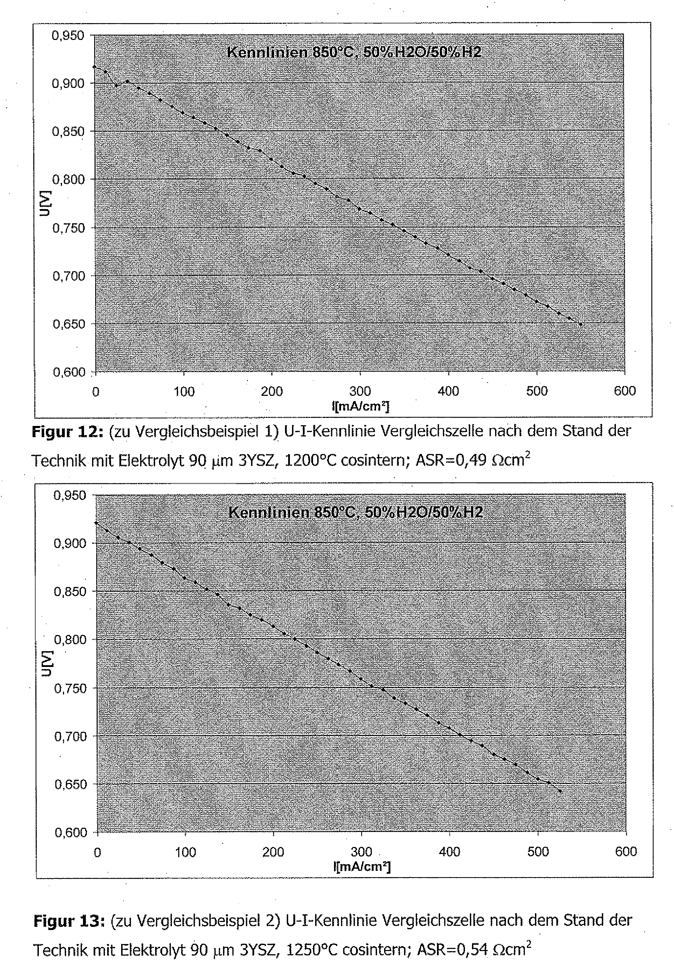

Vergleichsbeispiel 1 (Stand der Technik) (Figur 12):

Es wird eine dem Stand der Technik entsprechende Elektrolytschicht, die aus 90 $\mu$m dickem, 3 mol-% $Y_2O_3$ dotierten Zirkonium(IV)oxid besteht, welche Elektrolytschicht bei 1500 °C für 60 min gesintert wurde und eine Festigkeit von ca. 1440 MPa (Streifen im Zylinderbiege-Bruchtest) aufweist, gemäß der oben beschriebenen Art und Weise mit den oben beschriebenen Elektrodenpasten beschichtet und diese bei 1200°C eingebrannt. Es resultiert eine Zelle mit einem Flächenwiderstand von 0,49 $\Omega$cm$^2$.

Vergleichsbeispiel 2 (Stand der Technik) (Figur 13):

Es wird eine dem Stand der Technik entsprechende Elektrolytschicht, die aus 90 $\mu$m dickem, mit 3 mol-% $Y_2O_3$ dotierten Zirkonium(IV)oxid besteht, welche Elektrolytschicht bei 1500 °C für 60 min gesintert wurde und eine Festigkeit von ca. 1440 MPa (Streifen im Zylinderbiege-Bruchtest) aufweist, gemäß der oben beschriebenen Art und Weise mit den oben beschriebenen Elektrodenpasten beschichtet und diese bei 1250°C eingebrannt. Es resultiert eine Zelle mit einem Flächenwiderstand von 0,53 $\Omega$cm$^2$.

## Patentansprüche

1. Elektrolyt für eine elektrolytgestützte Hochtemperatur-Brennstoffzelle, **dadurch gekennzeichnet, dass** der Elektrolyt Zirkonium(IV)oxid umfasst, das mit 4,6 bis 5,5 mol-% Ytterbium(III)oxid dotiert ist, und der Elektrolyt einen auf 30 °C bezogenen, thermischen Ausdehnungskoeffizienten (TEC) bei 800 °C im Bereich von 10,6*$10^{-6}$ K$^{-1}$ bis 11,1 *$10^{-6}$ K$^{-1}$ aufweist, bestimmt mit Bezugstemperatur T1 und Endtemperatur T2 gemäß

$$TEC\ (T1,T2) = [1/L(T1)] * [L(T2) - L(T1)]/[T2 - T1],$$

wobei L(T1) die Länge der Probe bei der Bezugstemperatur T1 und L(T2) die Länge der Probe bei der Endtemperatur T2 darstellt und
mindestens 98 % der Körner des Zirkonium(IV)oxids nach der Sinterung einen sichtbaren Durchmesser in einem thermisch angeätzten Querschliff einer elektronenmikroskopischen Aufnahme von kleiner als oder gleich 2,0 $\mu$m aufweisen.

2. Elektrolyt nach Anspruch 1, **dadurch gekennzeichnet, dass** die Dicke der Elektrolytschicht 50 - 150 $\mu$m beträgt.

3. Elektrolyte nach einem der Ansprüche 1 oder 2, **dadurch gekennzeichnet, dass** die Elektrolytschicht eine mechanische Festigkeit von mehr als 700 MPa aufweist, wenn die Bestimmung der mechanischen Festigkeit nach der Doppelringmessmethode der Norm EN 1288-2 erfolgt,
oder alternativ, dass die Elektrolytschicht eine mechanische Festigkeit von mehr als 800 MPa aufweist, wenn die Bestimmung der mechanischen Festigkeit gemäß dem Zylinderbiege-Bruchtest, bezogen auf das unter Zugspannung stehende Volumen eines Elektrolytstreifens von 50 mm x 7,7 mm x 0,090 mm, erfolgt.

4. Elektrolyt nach einem der Ansprüche 1 bis 3, **dadurch gekennzeichnet, dass** der Quotient aus zwei Eigenschaften der Elektrolytschicht, nämlich der Leitfähigkeit dividiert durch die Dotierungskonzentration, als Kenngröße folgende Werte annimmt:

(spezifische Leitfähigkeit des Elektrolyten bei 850 °C, gemessen in der Einheit Siemens/Meter) / (Konzentration der Dotierung des Zirkonium(IV)oxids mit Ytterbium(III)oxid, gemessen in mol-%) > 1,0 S/(m mol-%).

5. Elektrolyt nach einem der Ansprüche 1 bis 4 als Bestandteil einer elektrolytgestützten Brennstoffzelle, **dadurch gekennzeichnet, dass** der spezifische Flächenwiderstand der elektrolytgestützten Zelle <= 0,4 $\Omega$cm$^2$ beträgt.

6. Herstellung eines Elektrolyten nach einem der Ansprüche 1 bis 5 für eine elektrolytgestützte Brennstoffzelle, **dadurch gekennzeichnet, dass** die Elektrolytschicht zuerst als Folie gegossen und anschließend gesintert wird, wobei das Sintern bei einer Temperatur von 1400 °C bis 1550 °C erfolgt, und wobei die Zeit, während der die Elektrolytschicht bei der Sintertemperatur gehalten wird, 15 bis 600 min beträgt.

7. Herstellung eines Elektrolyten nach Anspruch 6, **dadurch gekennzeichnet, dass** die Haltezeit bei einer Sintertemperatur von 1475 °C bis 1550 °C 15 bis 60 min beträgt, bzw. die Haltezeit bei einer Sintertemperatur von 1445 °C bis 1475 °C 60 bis 180 min beträgt, bzw. die Haltezeit bei einer Sintertemperatur von 1400 °C bis 1445 °C 120 bis 600 min beträgt.

8. Verwendung des Elektrolyten nach einem der Ansprüche 1 bis 5 für eine elektrolytgestützte Brennstoffzelle.

9. Verwendung einer Brennstoffzelle nach Anspruch 8 für einen Brennstoffzellen-Stapel, der Interkonnektoren mit einem thermischen Ausdehnungskoeffizienten von 11,5 - 12,5 * 10$^{-6}$ K$^{-1}$ aufweist.


**Claims**

1. An electrolyte for an electrolyte-supported high-temperature fuel cell, **characterised in that** the electrolyte comprises zirconium (IV) oxide which is doped with 4.6 to 5.5 mole % ytterbium (III) oxide, and the electrolyte has a coefficient of thermal expansion (TEC), relative to 30°C, at 800°C in the range from 10.6 x 10$^{-6}$ K$^{-1}$ to 11.1 x 10$^{-6}$ K$^{-1}$, determined with reference temperature T1 and final temperature T2 in accordance with

$$TEC\ (T1,T2) = [1/L(T1)] \times [L(T2) - L(T1)]/[T2 - T1],$$

wherein L(T1) represents the length of the sample at the reference temperature T1 and L(T2) represents the length of the sample at the final temperature T2, and
at least 98% of the grains of the zirconium (IV) oxide after sintering have a visible diameter in a thermally etched cross-section of an electron-microscope image of less than or equal to 2.0 $\mu$m.

2. An electrolyte according to Claim 1, **characterised in that** the thickness of the electrolyte layer is 50 - 150 $\mu$m.

3. Electrolytes [sic] according to one of Claims 1 or 2, **characterised in that** the electrolyte layer has a mechanical strength of more than 700 MPa if the mechanical strength is determined in accordance with the double-ring measurement method of Standard EN 1288-2,
or alternatively
**in that** the electrolyte layer has a mechanical strength of more than 800 MPa if the mechanical strength is determined in accordance with the cylinder bending fracture test, relative to the volume, which is under tensile stress, of an electrolyte strip of 50 mm x 7.7 mm x 0.090 mm.

4. An electrolyte according to one of Claims 1 to 3, **characterised in that** the quotient of two properties of the electrolyte layer, namely the conductivity divided by the doping concentration, assumes the following values as characteristic variable:

(specific conductivity of the electrolyte at 850°C, measured in the unit Siemens/metre) / (concentration of the doping of the zirconium (IV) oxide with ytterbium (III) oxide, measured in mole %) > 1.0 S/(m mole %).

5. An electrolyte according to one of Claims 1 to 4 as constituent of an electrolyte-supported fuel cell, **characterised in that** the specific surface resistivity of the electrolyte-supported cell <= 0.4 $\Omega cm^2$.

6. Production of an electrolyte according to one of Claims 1 to 5 for an electrolyte-supported fuel cell, **characterised in that** the electrolyte layer is first cast as a film and is then sintered, the sintering taking place at a temperature of 1400°C to 1550°C, and the time during which the electrolyte layer is held at the sintering temperature being 15 to 600 min.

7. Production of an electrolyte according to Claim 6, **characterised in that** the retention time for a sintering temperature of 1475°C to 1550°C is 15 to 60 min., or the retention time for a sintering temperature of 1445°C to 1475°C is 60 to 180 min., or the retention time for a sintering temperature of 1400°C to 1445°C is 120 to 600 min.

8. Use of the electrolyte according to one of Claims 1 to 5 for an electrolyte-supported fuel cell.

9. Use of a fuel cell according to Claim 8 for a fuel cell stack which has interconnectors with a coefficient of thermal expansion of 11.5 - 12.5 x $10^{-6}$ $K^{-1}$.

**Revendications**

1. Électrolyte pour une pile à combustible à haute température à base d'électrolyte, **caractérisé en ce que** l'électrolyte comprend de l'oxyde de zirconium(IV) dopé avec 4,6 à 5,5 % molaire d'oxyde d'ytterbium(III), et l'électrolyte présente un coefficient de dilatation thermique (TEC) à 800 °C, rapporté à 30 °C, situé dans la fourchette comprise entre 10,6*$10^{-6}$ $K^{-1}$ et 11,1*$10^{-6}$ $K^{-1}$, déterminé avec une température de référence T1 et une température finale T2 selon la formule

$$TEC\ (T1,\ T2) = [1/L(T1)] * [L(T2) - L(T1)]/[T2 - T1],$$

dans laquelle L(T1) est la longueur de l'échantillon à la température de référence T1 et L(T2) est la longueur de l'échantillon à la température finale T2, et
au moins 98 % des grains de l'oxyde de zirconium(IV) ont après frittage un diamètre apparent inférieure ou égale à 2,0 $\mu m$ dans une coupe transversale décapée thermiquement d'un cliché en microscopie électronique.

2. Électrolyte selon la revendication 1, **caractérisé en ce que** l'épaisseur de la couche d'électrolyte s'élève à 50 - 150 $\mu m$.

3. Électrolyte selon l'une des revendications 1 ou 2, **caractérisé en ce que** la couche d'électrolyte présente une résistance mécanique de plus de 700 MPa, lorsque la détermination de la résistance mécanique est réalisée par la méthode de mesure avec doubles anneaux de la norme EN 1288-2,
ou de façon alternative
**en ce que** la couche d'électrolyte présente une résistance mécanique de plus de 800 MPa, lorsque la détermination de la résistance mécanique est réalisée selon le test de rupture de flexion de cylindre, rapporté au volume d'une bande d'électrolyte de 50 mm x 7,7 mm x 0,090 mm soumise à une contrainte de traction.

4. Électrolyte selon l'une des revendications 1 à 3, **caractérisé en ce que** le quotient de deux propriétés de la couche d'électrolyte, à savoir la conductivité divisée par la concentration de dopage, en tant que paramètre caractéristique, prend les valeurs suivantes :

(conductivité spécifique de l'électrolyte à 850 °C, mesurée en unité Siemens/mètre) / (concentration du dopage

**EP 2 245 692 B1**

de l'oxyde de zirconium(IV) par de l'oxyde d'ytterbium(III), mesurée en % molaire) > 1,0 S/(m % molaire).

5. Électrolyte selon l'une des revendications 1 à 4 en tant qu'élément d'une pile à combustible à base d'électrolyte, **caractérisé en ce que** la résistance de surface spécifique de la pile à base d'électrolyte s'élève à ≤ 0,4 Ωcm².

6. Fabrication d'un électrolyte selon l'une des revendications 1 à 5 pour une pile à combustible à base d'électrolyte, **caractérisée en ce que** la couche d'électrolyte est tout d'abord coulée sous forme d'un film, puis elle est frittée, le frittage étant réalisé à une température comprise entre 1 400 °C et 1 550 °C, et la durée durant laquelle la couche d'électrolyte est maintenue à la température de frittage étant comprise entre 15 et 600 min.

7. Fabrication d'un électrolyte selon la revendication 6, **caractérisée en ce que** le temps de maintien en cas d'une température de frittage située entre 1 475 °C et 1 550 °C est compris entre 15 et 60 min, ou le temps de maintien en cas d'une température de frittage située entre 1 445 °C et 1 475 °C est compris entre 60 et 180 min, ou le temps de maintien en cas d'une température de frittage située entre 1 400 °C et 1 445 °C est compris entre 120 et 600 min.

8. Utilisation de l'électrolyte selon l'une des revendications 1 à 5 pour une pile à combustible à base d'électrolyte.

9. Utilisation d'une pile à combustible selon la revendication 8 pour un empilement de piles à combustible qui présente des inter-connecteurs avec un coefficient de dilatation thermique de 11,5 - 12,5 *10⁻⁶ K⁻¹.

15

**Figur 1:** Messung der thermischen Ausdehnungskoeffizienten
Messbedingungen: Die Ausgangslänge beträgt ca. 10/20 mm. Abmessungen: 1/3 mm x 3 mm;
Temperaturprofil: Raumtemperatur -> 2 K -> 870 °C -> 5 K -> Raumtemperatur;
Argon; Bezugstemperatur: 30 °C

EP 2 245 692 B1

**Figur 2:** Umrechnung der Festigkeit der YbSZ-Streifen auf das Normvolumen von 1 mm$^3$ und auf andere Probengrößen

Festigkeit als Funktion der Probengröße

EP 2 245 692 B1

H-5Yb-F-070809 Pr.14, 10kV, 8mm, 5000x    |———— 6 µm ————|

**Figur 3:** Elektronenmikroskopische Aufnahme eines thermisch angeätzten Querschliffs einer gesinterten Elektrolytschicht mit 5YbSZ
$T_{max}$ = 1400 °C
Haltezeit = 180 min
Rate = 60 K/h
Mindestens 98 % der Körner kleiner als 2,0 µm

H-5Yb-F-070809 Pr.15, 10kV, 8mm, 5000x |———— 6 µm ————|

**Figur 4:** Elektronenmikroskopische Aufnahme eines thermisch angeätzten Querschliffs einer gesinterten Elektrolytschicht mit 5YbSZ

$T_{max}$ = 1410 °C

Haltezeit = 156 min

Rate = 60 K/h

Mindestens 98 % der Körner kleiner als 1,6 µm

H-5Yb-F-070809 Pr.12, 10kV, 8mm, 5000x |—— 6 µm ——|

**Figur 5:** Elektronenmikroskopische Aufnahme eines thermisch angeätzten Querschliffs einer gesinterten Elektrolytschicht mit 5YbSZ
$T_{max}$ = 1400 °C
Haltezeit = 120 min
Rate = 60 K/h
Mindestens 98 % der Körner kleiner als 1,3 µm

H-5Yb-F-070809 Pr.13, 10kV, 8mm, 5000x $\longmapsto$ 6 µm $\longrightarrow$

**Figur 6:** Elektronenmikroskopische Aufnahme eines thermisch angeätzten Querschliffs einer gesinterten Elektrolytschicht mit 5YbSZ
$T_{max}$ = 1425 °C
Haltezeit = 120 min
Rate = 60 K/h
Mindestens 98 % der Körner kleiner als 1,9 µm

H-5Yb-F-070809 Pr.16, 10kV, 8mm, 5000x $\vdash$——— 6 µm ———$\dashv$

**Figur 7:** Elektronenmikroskopische Aufnahme eines thermisch angeätzten Querschliffs einer gesinterten Elektrolytschicht mit 5YbSZ
$T_{max}$ = 1425 °C
Haltezeit = 180 min
Rate = 60 K/h
Mindestens 98 % der Körner kleiner als 1,6 µm

**Figur 8:** (zu Beispiel 1) U-I-Kennlinie Zelle mit Elektrolyt 75 μm 6YbSZ, 1200°C co-sintern;ASR=0,28 Ωcm²; ASR = area specific resistance= spez. Flächenwiderstand

**Figur 9:** (zu Beispiel 2) U-I-Kennlinie Zelle mit Elektrolyt 54 μm 4YbSZ, 1200°C co-sintern; ASR=0,31 Ωcm²

**Figur 10:** (zu Beispiel 3) U-I-Kennlinie Zelle mit Elektrolyt 89 μm 5YbSZ, 1200°C co-sintern; ASR=0,32 Ωcm$^2$

**Figur 11:** (zu Beispiel 4) U-I-Kennlinie Zelle mit Elektrolyt 91 μm 5YbSZ, 1250°C co-sintern; ASR=0,36 Ωcm$^2$

**Figur 12:** (zu Vergleichsbeispiel 1) U-I-Kennlinie Vergleichszelle nach dem Stand der Technik mit Elektrolyt 90 μm 3YSZ, 1200°C cosintern; ASR=0,49 Ωcm²

**Figur 13:** (zu Vergleichsbeispiel 2) U-I-Kennlinie Vergleichszelle nach dem Stand der Technik mit Elektrolyt 90 μm 3YSZ, 1250°C cosintern; ASR=0,54 Ωcm²

## IN DER BESCHREIBUNG AUFGEFÜHRTE DOKUMENTE

**In der Beschreibung aufgeführte Patentdokumente**

- WO 2008019926 A1
- WO 9411322 A
- WO 2005011040 A2
- WO 2005013390 A2

**In der Beschreibung aufgeführte Nicht-Patentliteratur**

- **LV ; MITARBEITER.** *Mat. Sci. & Eng .,* 2007, vol. A 448, 355